Europäisches Patentamt

European Patent Office

Office européen des brevets

(11) Publication number: **0 072 538**
**B1**

## (12) EUROPEAN PATENT SPECIFICATION

(45) Date of publication of patent specification: **26.06.85**

(51) Int. Cl.⁴: **H 02 K 15/04**

(21) Application number: **82107307.9**

(22) Date of filing: **11.08.82**

(54) Armature coil winding apparatus for flat motor.

(30) Priority: **14.08.81 JP 126736/81**

(43) Date of publication of application:
**23.02.83 Bulletin 83/08**

(45) Publication of the grant of the patent:
**26.06.85 Bulletin 85/26**

(84) Designated Contracting States:
**CH DE FR GB IT LI NL SE**

(56) References cited:
**US-A-3 550 645**
**US-A-3 599 680**
**US-A-3 955 273**

(73) Proprietor: **Hitachi, Ltd.**
**5-1, Marunouchi 1-chome**
**Chiyoda-ku Tokyo 100 (JP)**

(72) Inventor: **Orikasa, Tetsuo**
**7-16, Sakuragawacho-1-chome**
**Hitachi-shi (JP)**

(74) Representative: **Altenburg, Udo, Dipl.-Phys.
et al
Patent- und Rechtsanwälte Bardehle-
Pagenberg-Dost-Altenburg & Partner Postfach
86 06 20
D-8000 München 86 (DE)**

Courier Press, Leamington Spa, England.

## Description

### Background of the Invention
#### (1) Field of the Invention

This invention relates to armature coil winding apparatus for flat motors, and more particularly it deals with a coil winding apparatus equipped with improved jigs for winding coils to enable coil windings to be automatically effected.

#### (2) Description of the Prior Art

Heretofore, winding of armature coils for a flat motor has hitherto been performed wholly manually and the operation has been time-consuming. There has, of course, been a desire for effecting automatic armature coil winding, but realization of benefits from automatic coil winding has hitherto been hampered by the facts that, in addition to the need to wind the coil in a complex form, the unavailability of a suitable winding machine has made it impossible to obtain an apparatus enabling armature coil winding to be effected automatically at high speed.

In one type of automatic armature coil winding apparatus known in the art, coils can be wound automatically by winding a magnetic wire in a predetermined number of turns on pins of a winding machine by using a robot or a numerical control device to successively wind a plurality of coils, as disclosed in U.S. Patent 3,550,645 for example. This apparatus may be used if no particular importance is attached to the time required for carrying out winding, the cost or the finishing touches given to the product. However, this apparatus is incapable of achieving high speed operation and the apparatus is rather high in cost. The apparatus known from US—A—3 599 680 and taken into consideration in the preamble of claim 1 has essentially the same inconveniences.

### Summary of the Invention
#### (1) Objects of the Invention

A principal object of this invention is to provide an armature coil winding apparatus for a flat motor capable of effecting automatic armature coil winding by using a simple construction and jigs of novel construction.

Another object is to provide an armature coil winding apparatus for a flat motor of improved operational efficiency in which armature coils produced can have the shape corrected within a coil winding jig while a current is passed thereto so that a set of coils can be produced in completed form in one series of coil winding operations.

#### (2) Statement of the Invention

Those objects are solved within a disc armature coil winding apparatus as mentioned in the preamble of claim 1 according to the invention by the characterizing features of claim 1.

According to the invention, there is provided a disc armature coil winding apparatus comprising a coil winding jig having pins for producing a set of coils, a disc-shaped winding jig located on the coil winding jig capable of moving between an open position and a closed position and having a segmental cutout, and a segmental winding jig adapted to be inserted in the segmental cutout of the winding jig for winding coils on the pins. In this armature coil winding apparatus, when a set of coils that has been wound is heated by passing a current thereto immediately after coil winding, the set of wound coils is pressed at a predetermined pressure level between the winding jig and a segmental press member.

### Brief Description of the Drawings

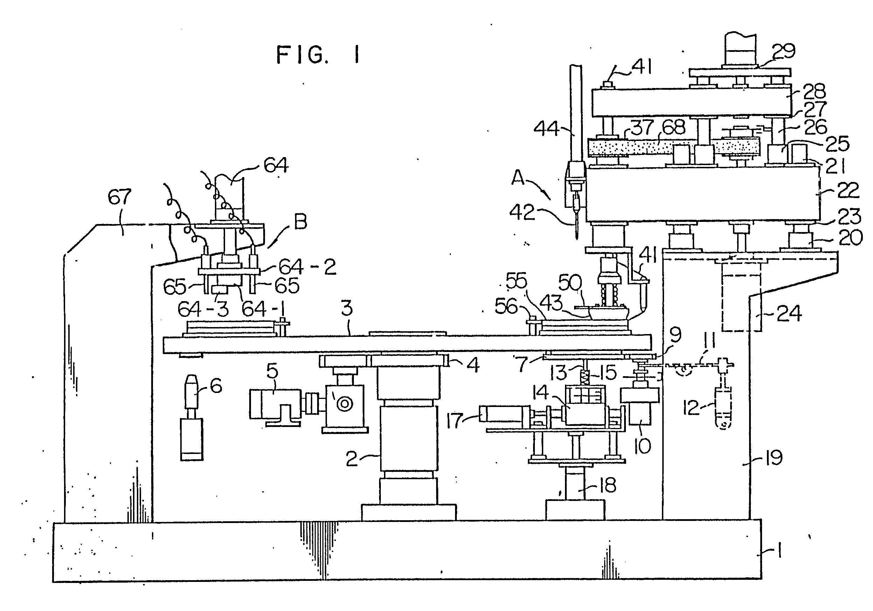

Fig. 1 is a schematic side view of the armature coil winding apparatus for a flat motor comprising one embodiment of the invention, showing the apparatus in its entirety;

Fig. 2 is a sectional side view of the essential portions of the winding unit;

Fig. 3 is a sectional side view of the winding unit, showing the winding unit in condition for indexing;

Fig. 4 is a sectional side view of the winding unit, showing the winding unit in condition in which coil winding has been finished;

Fig. 5 is a plan view of the essential portions of the winding unit;

Fig. 6 is a connection diagram showing the manner in which the coil is connected;

Fig. 7 is a plan view of the pins arranged for producing a coil of the tortoise-shell pattern; and

Fig. 8 is a plan view of one example of the flat coil produced by working the invention.

### Detailed Description of the Preferred Embodiment

One embodiment of the invention will now be described by referring to the accompanying drawings. The numeral 1 designates a base for supporting the apparatus as a whole having a post 2 located in upright position in the central portion. The post 2 supports thereon for rotation a turntable 3 being formed integrally therewith a gear 4 meshing with an output gear secured to an output shaft of a gear motor 5. The numeral 6 designates a guide pin actuated by a hydraulic or air cylinder for positioning the turntable 3 in a predetermined location. The turntable 3 supports thereon through thrust bearings 61 indexing tables 60 for rotation each of which has an indexing gear 7 secured to its lower portion. The numeral 8 is a coil winding jig in the shape of a disc secured to the surface of the indexing table 60. The numeral 9 is a gear meshing with the indexing gear 7 which is driven by a stepping motor 10. The gears 9 and 7 are brought into and out of meshing engagement with each other by a lever 11 actuated by an air cylinder 12.

The numeral 13 is a twist pin connected through a spring 15 to a twist motor 14 so as to prevent a wire break-out caused by shortening of the overall length of a coil tap 16 as the latter is twisted. The twist motor 14 is equipped with an air cylinder 17 for causing the coil tap 16 to slide leftwardly and rightwardly after it has been twisted to cause the coil tap 16 to be removed from the twist pin 13. The twisting section including these parts is constructed to be moved up and down by an air cylinder 18.

19 is a post for supporting a coil winding unit A having at its upper portion guide holders 20 supporting guide posts 21 which support through guide bushes 23 a slide base 22 for vertical movement, so that the coil winding unit A mounted thereon can move up and down as a unit. The up-and-down movement of the coil winding unit A in its entirety is effected by an air cylinder 24. Mounted at an upper portion of the slide base 22 are another kind of guide holders 25 supporting guide posts 26 which in turn support a slide base 28 through bushes 27 for vertical movement by means of an air cylinder 29. The slide base 28 is mounted at one end thereof on a ball bearing 30 having extending therethrough and force-fitted therein from below a coil winding shaft 31 having a fixed screw 32 secured to its upper end. The coil winding shaft 31 is formed with a vertical bore 31-1 and has a nozzle 31-2 at its upper end while it has in the center a spline shaft portion 31-3 with splines at its outer circumferential surface. The shaft 31 has at a part of its lower end a cutout 31-4 supporting a guide reel 33 for rolling movement and has a ball bearing 34 at an opening at its lower end.

35 is a spline sleeve having a ball bearing 36 mounted in the middle of its outer circumferential surface and a pulley 37 secured to its upper end portion by a fixing screw 38. The spline sleeve 35 has at its lower end a rotary nozzle 40 supported by an arm 39 for guiding a magnetic wire 41 extending therethrough. The magnetic wire 41 comprises an enamel wire sheathed with a coating of thermal melt-adhesion material, such as phenolic, epoxy, or butyral resin. 42 is a turn stop pin for a segmental winding jig 43 mounted as presently to be described which pin is attached to the forward end of an air cylinder 44 for engagement with a positioning cutout 50-1 of the segmental winding jig 43 when the segmental winding jig 43 moves upwardly and downwardly in sliding movement from its uppermost position to effect turn stop of the segmental winding jig 43 to avoid relative displacements of the segmental winding jig 43 and the coil winding jig 8.

The segmental winding jig 43 which constitutes a main component of the invention is supported coaxially with the winding shaft 31 by a shaft 45 journalled by the ball bearing 34 fitted in the lower end opening of the winding shaft 31 and suitably urged by the biasing force of a coil spring 46 wound on the shaft 45 into contact with the coil winding jig 8 of the disc-shape.

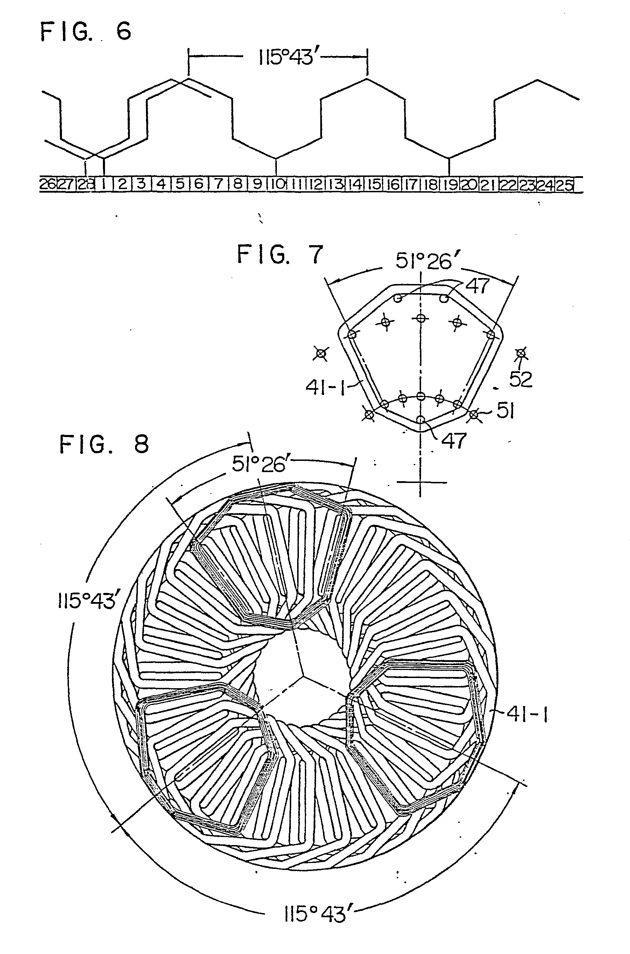

The segmental winding jig 43 has three spring pins 47 for forming tortoise-shell pattern coils 41-1 (Fig. 8), one spring 47 being in a position close to the center of the coil winding jig 8 of the disc-shape and other two spring pins 47 being located remote therefrom. The spring pins 47 can move vertically in sliding movement and are urged by the biasing forces of coil springs 48 to move downwardly.

The coil spring 46 fitted over the shaft 45 for urging the segmental winding jig 43 has a resilience several times greater than that of the coil springs 48 fitted over the spring pins 47, which resilience is of a value optimally selected with regard to the diameter of the magnetic wire 41 by taking into consideration the rigidity of the wire and the tension at which the magnetic wire 41 is tensioned.

If the resilience is too great, it would be difficult to secure a coil space which is determined between pins 51 subsequently to be described in the winding step, and it would be difficult to obtain a uniform shape for the coils from the time the coil winding is initiated until the time the coil winding is finished. The coils successively wound would be extended in the direction of the outer periphery (horizontally), making it impossible to obtain a predetermined outer peripheral shape in wound coils.

If the resilience is too weak, no coil extension in the direction of the outer periphery would take place but the coils would have their thickness increased in the overlapping winding direction, thereby making it impossible to obtain a predetermined shape in wound coils.

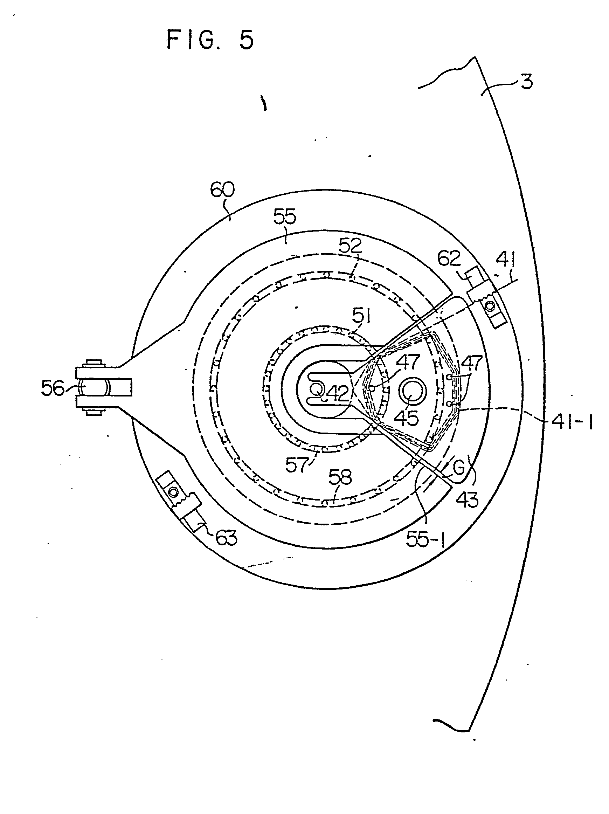

49 is a slide plate through which the spring pins 47 penetrate and which is screwed to the shaft 45. As can be clearly seen in the aforesaid construction, sliding movement of the shaft 45 causes the surface of the slide plate 49 to move flanges of the spring pins 47 upwardly so that the spring pins 47 extending downwardly from the undersurface of the segmental winding jig 43 move into and out of the jig 43. 50 is a cover applied to the surface of the segmental winding jig 43 which slidably supports the spring pins 47 and journals the shaft 45 at its central portion. To this end, the cover 50 is formed of sintered oilless bearing material. As shown in Fig. 5, the coil winding jig 8 of the disc-shape has a plurality of pins 51 located equidistantly from the center of the jig 8 in positions slightly outwardly of the inner one of the spring pins 47, and a plurality of pins 52 located equidistantly from the center of the jig 8 in positions slightly inwardly of the outer ones of the spring pins 47. In the embodiment shown and described herein, each pins 51 and 52 have 28 pins respectively and cooperate with the spring pins 47 to wind coils 41-1 of the heptagonal shape as shown in Fig. 7. The coil 41-1 is wound not on the adjacent pins 51 and 52 but on every fourth pins 51 and 52. 53 designates arcuate grooves formed in a lower portion of the segmental winding jig 43 and have the same radius as the rows of pins 51 and 52. The arcuate grooves 53 have a width slightly greater than the diameter of the pins 51 and 52 and a depth which is such that the pins 51 and 52 do not strike the bottom of the grooves 53 when the segmental winding jig 43 is forced against an ejecting plate 54 which is formed with fifty six (56) apertures each allowing one of the pins 51 and 52 to extend therethrough and arranged in a recess on the surface of the disc-shaped coil winding jig 8. 55 is a disc-shaped winding jig mounted at one portion of its outer periphery on a support pole 56 through a support pin 56-1 in a manner to be freely opened and closed. 57 and 58 are arcuate grooves formed on the undersurface of the disc-shaped winding jig 55 and having the same radius as the rows of pins 51 and 52. The width and depth of the arcuate grooves 57 and 58 are the same as those of the arcuate grooves 53. 59 is a coil spring for urging by its biasing force the disc-shaped winding jig 55 to rise to a predetermined elevation and keeping same in said elevation. The coil spring 59 is wound on the outer circumferential surface of the support pole 56. 56-2 is a slot allowing the support pin 56-1 to move vertically a predetermined distance and is formed in the support pole 56. The coil spring 59 biases the disc-shaped winding jig 55 upwardly beforehand and is operative, when an indexing table 60 is indexed after completion of coil winding, to enable indexing to take place smoothly by maintaining the pins 51 and 52 and the arcuate grooves 53, 57 and 58 in adequate loose interfitting relation without mutual interference. The ejecting plate 54 is coated on its surface with polytetrafluoroethylene or ceramics, so that no damage will be suffered even if coil short-circuiting occurs when a current is passed to effect heating, heat dissipation will be avoided when a current is passed from effecting heating and the wound coils will be readily released when ejected after coil winding is completed. The disc-shaped winding jig 55 is also treated at its undersurface in the same manner as described by referring to the surface of the ejecting plate 54. 55-1 is a segmental cutout formed in one portion of the disc-shaped winding jig 55 which is slightly smaller than the six pitches of the pins 51 and 52, so that when a coil is wound at four pitches the coil will be prevented from being wound on the pins disposed outside of this range. The segmental cutout 55-1 which allows insertion therein of the segmental winding jig 43, is spaced apart from the jig 43 by a gap G of a size allowing the magnetic wire 41 to drop along an inclined surface of the segmental winding jig 43. The segmental winding jig 43 has a flat portion at its lower end which is angled at a slightly greater degree than the pitches (four pitches in this embodiment) of the pins 51 and 52 on which a coil is wound.

The indexing table 60 is formed on the side of its outer circumferential surface with a recess 60-1 against which a ball 60-2 is kept in pressing engagement by the biasing force of a coil spring 60-3, to increase the precision with which indexing is effected.

61 is a thrust bearing for journalling the indexing table 60.

62 is a coil winding initiating clamp and 63 is a coil winding terminating clamp both located on the indexing table 60. Upon completion of coil winding, the winding initiating portion and the winding terminating portion are held by these clamps 62 and 63. When the coils 41-1 are held by the clamps 62 and 63, serrations of the clamps 62 and 63 rupture the sheathings of the coils 41-1 to reach the core (copper wire), to thereby electrically connect the clamps 62 and 63 with the coils 41-1. Upon a current of a predetermined value being passed to the clamps 62 and 63 in this condition, the coils 41-1 generate heat and the melt-adhesion coatings of the coils 41-1 are melted to allow the coils 41-1 to be joined by melt-adhesion. After being cooled for a predetermined period of time, the thermal melt-adhesion coatings set to provide a set of hard coils of a predetermined shape. 65 is an electrode for passing a current to the clamps 62 and 63 and is vertically moved by means of a cylinder 64 having at its lower end a pressing block 64-1 comprising a pressing member 64-2 for biasing the disc-shaped winding jig 55 downwardly when a current is passed to the coil 41-1 to heat the same, and a segmental press member 64-3 for directly pressing against the coil 41-1 through the segmental cutout 55-1 of the disc-shaped winding jig 55. 67 is a post for supporting a pressing, shaping and current passing electrode section, and 68 is a timing belt for transmitting rotation to the winding shaft 31 as from a timing motor, not shown, and equipped with a position sensor, not shown, for bringing the rotary nozzle 40 to a halt in a predetermined position at all times.

In the aforesaid construction, the turntable 3 is arranged with a coil winding unit A, a current passing and heating unit B and an ejection unit. By arranging these three units in two or three combinations with each three units being minimum components, it is possible to provide a coil winding apparatus of increased efficiency. More specifically, the coil winding unit A may be located above the starting point of the turntable 3, the current passing and heating unit B may be located at 120 degrees from the starting point of the turntable 3 and the ejecting unit may be located at 240 degrees therefrom. In this embodiment, operation of the ejection unit is not necessarily performed without manual attention through the entire process. The ejecting plate 54 is pushed upwardly from the indexing table 60 and the disc-shaped coil winding jig 8 by cylinder pins, not shown, through apertures, not shown, to facilitate releasing of the coils 41-1 from the pins 47, 51 and 52 on which they are wound.

Operation of the embodiment of the aforesaid construction will be described hereinafter.

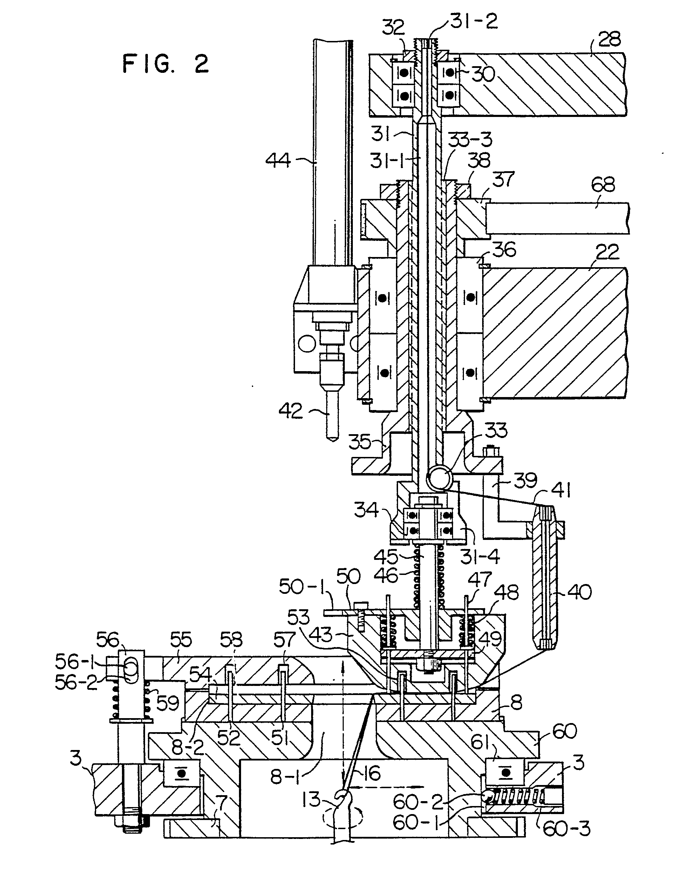

The magnetic wire 41 payed out of a bobbin, not shown, is suitably tensioned by tensioning means, not shown, passed through the axial bore in the winding shaft 31, guided by the guide reel 33, and passed through the rotary nozzle 40 until its forward end is held by the clamp 62 as shown in Fig. 5. Then the winding unit A is brought to a position shown in Fig. 2 by actuating the cylinders attached to the various parts, in this condition coil winding can be carried out. That is, when the winding unit A is in this condition, the segmental winding jig 43 is inserted in the cutout 55-1 of the disc-shaped winding jig 55 and kept in contact with the surface of the ejecting plate 54 by the biasing force of the coil spring 46 or located close thereto with slight clearance. At this time, the three spring pins 47 are in pressing contact with the surface of the ejecting plate 54 at their lower ends by the biasing force of the springs 48 at a predetermined pressure level. As described hereinabove, the coil winding jig 8 has the pins 51 and 52 attached thereto, so that the tortoise-shell pattern coils 41-1 can be wound on the pins 47, 51 and 52.

Upon a start button, not shown, being depressed, a stepping motor, not shown, for performing coil winding begins to rotate and rotation thereof is transmitted through the timing belt 68 to the pulley 37 and spline sleeve 35, to rotate the rotary nozzle 40. Rotation of the rotary nozzle 40 allows the magnetic wire 41 to slide along the inclined surface of the side wall of the segmental winding jig 43 and wound successively on the pins 51 and 52 on the coil winding jig 8.

At this time, the winding shaft 31 and the segmental winding jig 43 are in a lower position and the spring pins 47 extend downwardly into contact with the ejecting plate 45, so that the magnetic wire 41 is wound on the pins 51 and 52 and the spring pins 47 to form a coil of the heptagonal shape as shown in Fig. 7. After the wire 41 is wound with a predetermined number of turns, the rotary nozzle 40 is brought to a halt in a predetermined position. Difficulties would be experienced in forming the coil 41-1 in a predetermined shape in a narrow space (especially in the pitches of the pins 51), and the coil 41-1 tends to expand horizontally or become thick vertically. This problem is obviated, however, in this embodiment because the segmental winding jig 43 is pressed by a suitable force and the magnetic wire 41 is suitably tensioned, so that the segmental winding jig 43 moves upwardly, though slightly, as the coil 41-1 is wound to enable the coil 41-1 to be wound correctly in the predetermined shape.

Additionally since the segmental winding jig 43 and the cutout 55-1 of the disc-shaped winding jig 55 are in suitable dimensional relation to each other, it is possible to wind the coil 41-1 on the predetermined pins 51 and 52.

After the magnetic wire 41 is wound with a predetermined number of turns, the air cylinder 18 is actuated to move the twist pin 13 upwardly and the coil 41-1 is hooked by a hook of the twist pin 13 as the rotary nozzle 40 makes another revolution. When the rotary nozzle 40 finishes its revolution, the air cylinder 18 is deactuated to restore the twist pin 13 to its regular position.

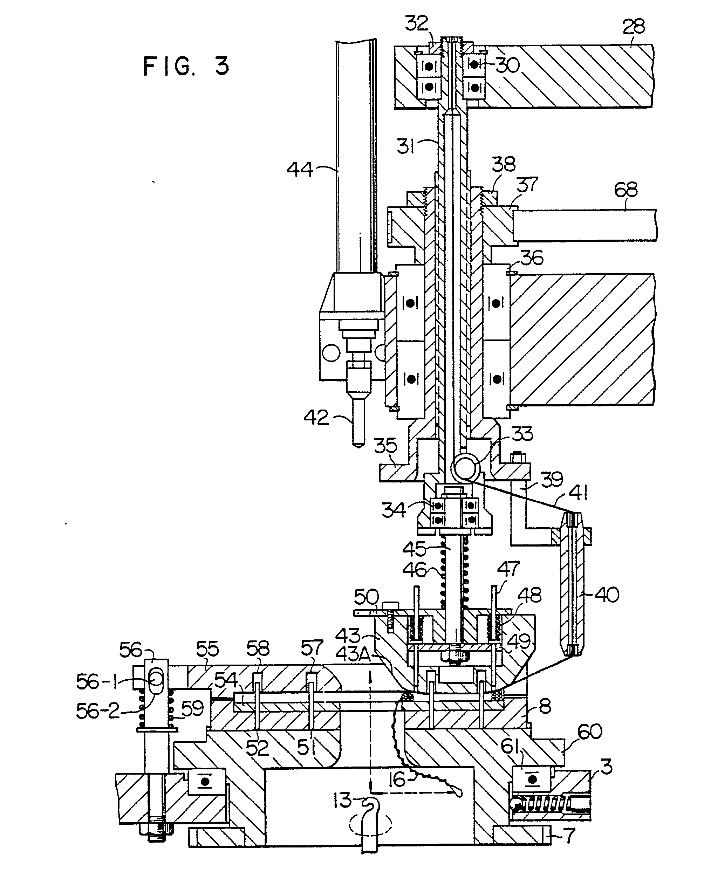

When winding of a set of coils is finished, the air cylinder 29 is actuated to move the winding shaft 31 upwardly to an intermediate position shown in Fig. 3. This causes the slide plate 49 to move upwardly against the biasing force of the coil springs 48 for pulling up the three spring pins 47 extending downwardly from the lower portion of the segmental winding jig 43, and to withdraw the spring pins 47 into the segmental winding jig 43. At the same time, deflection of the coil spring 46 is lessened, so that the pressing force exerted by the segmental winding jig 43 on the coils 41-1 that have been wound is reduced to allow indexing to be performed smoothly.

Then the air cylinder 12 is actuated to move the lever 11 downwardly to thereby bring the indexing gear 7 into meshing engagement with the gear 9. Thereafter the stepping motor 10 is driven to perform indexing at a predetermined pitch (in this embodiment, 115° 43′ because connections are wave-shaped with 28 coils and adapted to become a 6-pole magnet.

At this time, the set of coils 41-1 that has been wound is still being pressed by the segmental winding jig 43 to prevent the coils 41-1 from rising to a higher elevation due to spring-back, so that the coils 41-1 can be smoothly fed by the pins 51 and 52 into a gap between the disc-shaped winding jig 55 and the ejecting plate 54. At this time, a portion of the disc-shaped winding jig 55 opposite the cutout 55-1 is biased upwardly by a predetermined amount by the coil spring 59, so that the pins 51 and 52 can be kept in suitable loose fitting relation to the arcuate grooves 53, 57 and 58 to enable indexing to be performed smoothly. Additionally the disc-shaped winding jig 55 has a substantial weight to press with a suitable pressure against a plurality of sets of coils fed into the aforesaid gap by indexing.

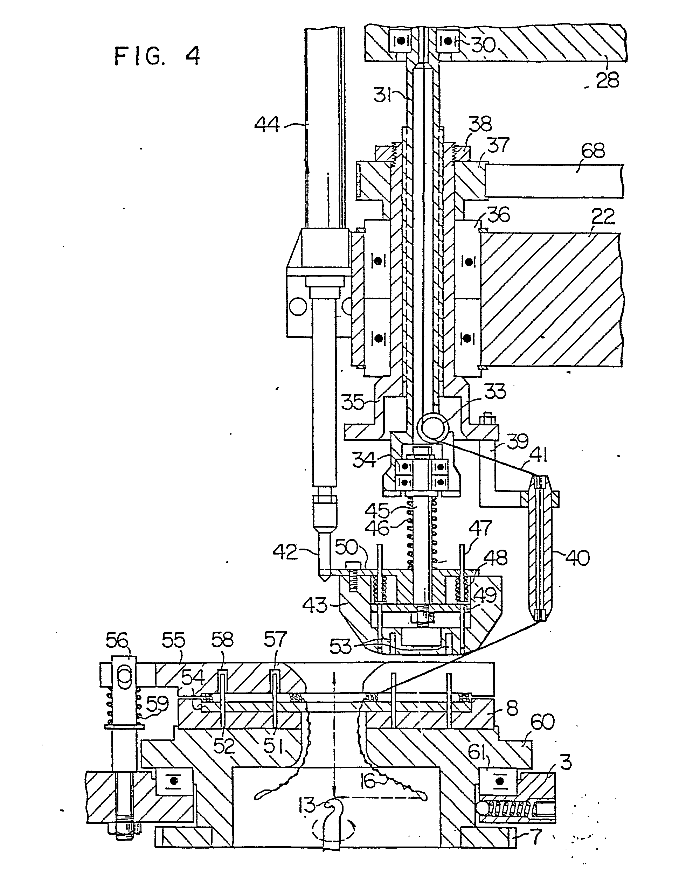

Upon initial indexing being finished, the segmental winding jig 43 in the intermediate position shown in Fig. 3 moves downwardly again to the position shown in Fig. 2 in which it is positioned against the next set of coil winding pins 51 and 52, and the rotary nozzle 40 is rotated again to perform winding of the next set of coils. When winding of the next set of coils is performed, the twist motor 14 is driven and coil tap 16 is twisted with a predetermined number of times. Upon completion of twisting, the twist pin 13 is brought to a halt in a position in which it faces a predetermined direction and then the air cylinder 17 is actuated to move the twist pin 13 leftwardly and rightwardly to release the coil tap 16 from the hook. These operations are repeated until a predetermined number of coils are wound, and then the terminating end of the wound wire is clamped by the clamp 63 and severed by a cutter, not shown. When winding of the predetermined number of coils is finished, the segmental winding jig 43 moves upwardly and the turntable 3 rotates. However, if the segmental winding jig 43 is moved upwardly immediately after completion of winding of the coils, the coils 41-1 that have been wound would rise higher. To avoid this phenomenon, in the first place the air cylinder 29 is actuated upon completion of winding of the coils 41-1 to move the winding shaft 31 upwardly to the intermediate position to cause the spring pins 47 of the segmental winding jig 43 to be withdrawn into the segmental winding jig 43. Then indexing (through 115° 43′ in the embodiment) is performed, and the sets of coils are embraced by the disc-shaped winding jig 55 and prevented from rising to a higher elevation. At this time, the set of coils 41-1 would at first appear in the cutout 55-1, but this set of coils is prevented from moving upwardly by the coils wound in superposed relation thereto and holding the initially wound coils down, to allow indexing to be smoothly performed. In this condition, the air cylinder 24 is actuated to move the winding unit A upwardly as a whole as shown in Fig. 4. At this time, the segmental winding jig 43 is rendered free, so that the air cylinder 44 is actuated at a moment earlier than the actuation of the air cylinder 24 to bring the turn stop 42 into engagement with a cutout of the cover 50 to prevent turning of the segmental winding jig 43. Thus the turntable 3 is indexed through 120 degrees, for example, to feed the sets of coils to the current passing and heating station B in which the air cylinder 64 is actuated and the pressing block 64-1 presses against the coils and the disc-shaped winding jig 55 to effect shaping, and at the same time the current passing electrode 65 is connected to the clamps 62 and 63 to pass a current to the coils. The pressing block 64-1 comprises the press member 64-2 for pressing against the disc-shaped winding jig 55, and the segmental pressing body 64-3 for directly pressing against the coils 41-1 through the cutout 55-1. This arrangement permits shaping of the coils 41-1 to be satisfactorily effected. During this time, a series of coil winding operations is performed repeatedly in the coil winding station A. The current passed is interrupted after lapse of a predetermined time interval. Thereafter the coils are allowed to stand in the pressed and shaped condition for a predetermined period of time (25—30 seconds) and the air cylinder 64 returns to the initial position. Upon the series of coil winding operations performed in the station A being finished, the turntable 3 is further indexed through 120 degrees to feed the shaped coils to the next following station in which the disc-shaped winding jig 55 is pivotally moved to an open position about the support pin 56-1 and the ejecting plate 54 is pushed up by an air cylinder, not shown, to enable the completed flat coils to be removed from the apparatus. Removing of the shaped coils may be performed either manually or automatically. Regardless of whether coil removing is performed manually or automatically, the provision of the ejection plate 54 facilitates removing of the completed coils from the apparatus.

The aforesaid construction of the embodiment of the armature coil winding apparatus in conformity with the invention can be modified as follows:

(a) The pins 51 and 52 and the spring pins 47 can have their numbers and positions suitably varied depending on the shape of coils to be wound;

(b) Various cylinders may be either hydraulic or air cylinders and may be replaced by electric motors;

(c) The ejecting plate 54 may be dispensed with. However, in this case, the disc-shaped coil winding jig 8 should have its surface provided with a coating;

(d) The coil spring 46 for biasing the segmental winding jig 43 has advantageously its resilience adjustable depending on the degree of tension of the magnetic wire 41 and the speed of rotation of the nozzle 40. Thus the diameter of the magnetic wire 41 handled is not specified;

(e) The turntable 3 may be replaced by conveyor means moving along a straight line;

(f) The disc-shaped coil winding jig 8 and the indexing table 60 may be formed integrally as a unitary structure; and

(g) The apparatus may be used as a vertical type as a whole.

From the foregoing description, it will be appreciated that the invention enables high speed automatic operation of armature coil winding for a flat motor to be realized for the first time by using a simple construction.

While a preferred embodiment of the invention has been shown and described hereinabove, it is to be understood that the invention is not limited to the specific form of the invention shown and described and that many changes and modifications may be made therein without departing from the scope of the invention claimed which is described in the claims.

**Claims**

1. A disc armature coil winding apparatus comprising

a coil winding jig (8) located on an indexing table (60) and

a plurality of pins (51, 52) arranged on circular lines in accordance with the number of coils (41-1) to be wound, characterized by a disc-shaped winding jig (55) on the coil winding jig (8) located on a turntable (3) whereby the disc-shaped winding jig (55) is movable between an open position and a closed position,

a cutout (55-1) formed in one portion of said disc-shaped winding jig (55), said cutout (55-1) being angled to suit the coil pitch of the coils (41-1) to be wound,

a segmental winding jig (43) adapted to be inserted in said cutout (55-1) with a small gap G;

a plurality of arcuate grooves (53, 57, 58) formed in said disc-shaped winding jig (55) and said segmental winding jig (43) on the same circular lines as said pins (51, 52) are arranged, and

means (40) for rotating a wire (41) while moving same around an inclined surface of said segmental winding jig (43).

2. A disc armature coil winding apparatus as claimed in claim 1, characterized in that said segmental winding jig (43) can be moved vertically and has pins (47) attached thereto and projecting toward said coil winding jig (8).

3. A disc armature coil winding apparatus as claimed in claim 2, characterized in that said pins (47) attached to said segmental winding jig (43) comprise spring pins (47) each urged by the biasing force of a coil spring (48) to move toward said coil winding jig (8).

4. A disc armature coil winding apparatus as claimed in claim 3, characterized in that said segmental winding jig (43) is normally biased toward the coil winding jig (8) with a suitable force by a coil spring (46).

5. A disc armature coil winding apparatus as claimed in claim 4, characterized in that said coil spring (46) biasing said segmental winding jig (43) has a resilience higher than that of the coil springs (48) urging said spring pins (47).

6. A disc armature coil winding apparatus as claimed in claim 5, characterized in that said segmental winding jig (43) has a slide plate (49) allowing said spring pins (47) to be withdrawn therein and emerge therefrom.

7. A disc armature coil winding apparatus as claimed in one of claims 3 to 6, characterized by means for moving said segmental winding jig (43) downwardly to bring said spring pins (47) into engagement with said coil winding jig (8), means for withdrawing said spring pins into said segmental winding jig (43), and means for indexing said indexing table (60) with the spring pins (47) in the withdrawn condition, whereby the segmental winding jig (43) can be released from engagement in said cutout (55-1) of said disc-shaped winding jig (55) to allow said turntable (3) to rotate.

8. An apparatus comprising a disc armature coil winding apparatus as claimed in one of claims 1 to 7 as coil winding unit (A) characterized by an electrical heating unit (B) located in a position spaced apart from said coil winding unit (A) by a predetermined angle to pass a current to the coils (41-1) while applying a predetermined pressure to said coil winding jig (8); and

a coil ejecting unit located in a position spaced apart from said electrical heating unit (B) by a predetermined angle, wherein said magnetic wire (41) is sheathed with thermal melt-adhesion coating material.

9. An apparatus as claimed in claim 8, characterized in that said electrical heating unit (B) has a press member (64-3) of a segmental shape slightly smaller in size than said cutout (55-1) formed in one portion of said disc-shaped winding jig (55), whereby said disc-shaped winding jig (55) and said press member (64-3) are pressed against the coils (41-1) at a predetermined pressure when a current is passed to the coils (41-1) to heat same.

### Patentansprüche

1. Eine Scheibenanker-Spulenwicklungsvorrichtung mit
einer Spulenwicklungsaufspannvorrichtung (8), die auf einem Schalttisch (60) angeordnet ist und
einer Vielzahl von Stiften (51, 52), die auf kreisförmigen Linien entsprechend der Zahl der zu wickelnden Spulen (41-1) angeordnet sind, gekennzeichnet durch eine scheibenförmige Wicklungsaufspannvorrichtung (55) auf der Spulenwicklungsaufspannvorrichtung (8), angeordnet auf einem Drehtisch (3), wobei die scheibenförmige Wicklungsaufspannvorrichtung (55) zwischen einer offenen Position und einer geschlossenen Position bewegbar ist,
einen Ausschnitt (55-1), der in einem Teil der scheibenförmigen Wicklungsaufspannvorrichtung (55) geformt ist und einen Winkel aufweist, welcher der Spulenweite der zu wickelnden Spulen (41-1) angepaßt ist,
eine segmentförmige Wicklungsaufspannvorrichtung (43), welche in den Ausschnitt (55-1) mit einem kleinen Spalt G einführbar ist,
eine Vielzahl von gebogenen Nuten (53, 57, 58), die in der scheibenförmigen Wicklungsaufspannvorrichtung (55) und der segmentförmigen Wicklungsaufspannvorrichtung (43) auf den gleichen kreisförmigen Linien, auf denen die Stifte (51, 52) angeordnet sind, geformt sind, und
eine Einrichtung (40) zum Rotieren eines Drahtes (41), während dieser um eine geneigte Oberfläche der segmentförmigen Wicklungsaufspannvorrichtung (43) bewegt wird.

2. Eine Scheibenanker-Spulenwicklungsvorrichtung nach Anspruch 1, dadurch gekennzeichnet, daß die segmentförmige Wicklungsaufspannvorrichtung (43) vertikal bewegbar ist und Stifte (47) aufweist, welche mit dieser verbunden sind und in Richtung zu der Spulenwicklungsaufspannvorrichtung (8) vorspringen.

3. Eine Scheibenanker-Spulenwicklungsvorrichtung nach Anspruch 2, dadurch gekennzeichnet, daß die Stifte (47), welche mit der segmentförmigen Wicklungsaufspannvorrichtung (43) verbunden sind, Federstifte (47) sind, die jeweils durch die Vorspannkraft einer Schraubenfeder (48) in Richtung zu der Spulenwicklungsaufspannvorrichtung (8) gezwungen werden.

4. Eine Scheibenanker-Spulenwicklungsvorrichtung nach Anspruch 3, dadurch gekennzeichnet, daß die segmentförmige Wicklungsaufspannvorrichtung (43) normalerweise gegen die Spulenwicklungsaufspannvorrichtung (8) mit einer geeigneten Kraft durch eine Schraubenfeder (46) vorgespannt ist.

5. Eine Scheibenanker-Spulenwicklungsvorrichtung nach Anspruch 4, dadurch gekennzeichnet, daß die Schraubenfeder (46), welche die segmentförmige Wicklungsaufspannvorrichtung (43) vorspannt, eine höhere Elastizität als diejenige der die Federstifte (47) vorspannenden Schraubenfedern (48) aufweist.

6. Eine Scheibenanker-Spulenwicklungsvorrichtung nach Anspruch 5, dadurch gekennzeichnet, daß die segmentförmige Wicklungsaufspannvorrichtung (43) eine Schiebeplatte (49) aufweist, welche ein Einziehen und ein Ausfahren der Federstifte (47) in Bezug auf die Aufspannvorrichtung ermöglicht.

7. Eine Scheibenanker-Spulenwicklungsvorrichtung nach einem der Ansprüche 3 bis 6, gekennzeichnet durch eine Einrichtung zum abwärts gerichteten Bewegen der segmentförmigen Wicklungsaufspannvorrichtung (43), um die Federstifte (47) mit der Spulenwicklungsaufspannvorrichtung (8) in Eingriff zu bringen, eine Einrichtung zum Zurückziehen der Federstifte in die segmentförmige Wicklungsaufspannvorrichtung (43) und eine Einrichtung zum Schalten des Schalttisches (60) mit den Federstiften (47) in dem zurückgezogenen Zustand, wobei die segmentförmige Wicklungsaufspannvorrichtung (43) freigegeben werden kann aus dem Eingriff in dem Ausschnitt (55-1) der scheibenförmigen Wicklungsaufspannvorrichtung (55), um eine Drehung des Drehtisches (3) zu ermöglichen.

8. Eine Vorrichtung mit einer Scheibenanker-Spulenwicklungsvorrichtung nach einem der Ansprüche 1 bis 7 als Spulenwicklungseinheit (A), gekennzeichnet durch eine elektrische Heizungseinheit (B), welche in einer Position angeordnet ist, die von der Spulenwicklungseinheit (A) um einen vorbestimmten Winkel beabstandet ist, um einen Strom zu den Spulen (41-1) zu schicken, während die Spulenwicklungsaufspannvorrichtung (8) mit einem vorbestimmten Druck beaufschlagt wird, und

eine Spulenauswurfeinheit, die in einer Position angeordnet ist, die von der elektrischen Heizungseinheit (B) um einen vorbestimmten Winkel beabstandet ist, wobei der magnetische Draht (41) mit thermischem Schmelzadhäsionsüberzugsmaterial ummantelt ist.

9. Vorrichtung nach Anspruch 8, dadurch gekennzeichnet, daß die elektrische Heizungseinheit (B) ein Druckbauteil (64-3) von segmentförmiger Form aufweist, deren Größe geringfügig kleiner als die Größe des in einem Teil der scheibenförmigen Wicklungsaufspannvorrichtung (55) geformten Ausschnitts (55-1) ist, wobei die scheibenförmige Wicklungsaufspannvorrichtung (55) und das Druckbauteil (64-3) mit einem vorbestimmten Druck gegen die Spulen (41-1) gedrückt werden, wenn ein Strom zur Erhitzung zu den Spulen (41-1) fließt.

**Revendications**

1. Appareil de bobinage de bobines d'induit en forme de disques, incluant

un gabarit (8) de bobinage des bobines, situé sur une table d'indexage (60), et

une pluralité de broches (51, 52) disposées sur des lignes circulaires conformément au nombre de bobines (41-1) devant être bobinées, caractérisé par un gabarit de bobinage (55) en forme de disque situé sur le gabarit (8) de bobinage des bobines, monté sur un plateau rotatif (3), ce qui a pour effet que le gabarit de bobinage (55) en forme de disque est déplacé entre une position ouverte et une position fermée,

une découpe (55-1) ménagée dans une partie dudit mandrin de bobinage (55) en forme de disque, ladite découpe (55-1) ayant une forme d'angle de manière à s'adapter au pas des bobines (41-1) devant être bobinées, un gabarit de bobinage (43) en forme de segment apte à être inséré dans ladite découpe (55-1) moyennant la présence d'un faible interstice (G);

une pluralité de gorges courbes (53, 57, 58) ménagées dans ledit gabarit de bobinage (55) en forme de disque et dans ledit gabarit de bobinage (43) en forme de segment, sur les mêmes lignes circulaires que celles sur lesquelles les broches (51, 52) sont disposées, et

des moyens (40) pour entraîner en rotation un fil (41), tout en déplaçant ce dernier autour d'une surface inclinée dudit gabarit de bobinage (43) en forme de segment.

2. Appareil de bobinage de bobines d'induit en forme de disques selon la revendication 1, caractérisé en ce que ledit gabarit de bobinage (43) en forme de segment peut être déplacé verticalement et comporte des broches (47) qui sont fixées sur lui et font saillie vers ledit gabarit (8) de bobinage des bobines.

3. Appareil de bobinage de bobines d'induit en forme de disques selon la revendication 2, caractérisé en ce que lesdites broches (47) fixées audit gabarit de bobinage (43) en forme de segment comportent des broches à ressort (47) repoussée chacune par la force de sollicitation d'un ressort hélicoïdal (48), en direction dudit gabarit (8) de bobinage des bobines.

4. Appareil de bobinage de bobines d'induit en forme de disques selon la revendication 3, caractérisé en ce que ledit gabarit de bobinage (43) en forme de segment est normalement sollicité en direction du gabarit (8) de bobinage des bobines, avec une force appropriée produite par un ressort hélicoïdal (46).

5. Appareil de bobinage de bobines d'induit en forme de disques selon la revendication 4, caractérisé en ce que ledit ressort hélicoïdal (43) sollicitant ledit gabarit de bobinage (43) en forme de segment possède une élasticité supérieure à celle des ressorts hélicoïdaux (48) repoussant lesdites broches à ressort (47).

6. Appareil de bobinage de bobines d'induit en forme de disque selon la revendication 5, caractérisé en ce que ledit gabarit de bobinage (43) en forme de segments possède une plaque coulissante (49) permettant auxdites broches à ressorts (47) d'être rétractées en son intérieur et d'être ressorties hors de cette plaque.

7. Appareil de bobinage de bobines d'armatures d'induit selon l'une des revendications 3 à 6, caractérisé par des moyens pour abaisser ledit gabarit de bobinage (43) en forme de segment de manière à amener lesdites broches à ressort (47) en contact avec ledit gabarit (8) de bobinage de bobines, des moyens pour rétracter lesdites broches à ressort dans ledit gabarit de bobinage (43) en forme de segment, et des moyens servant à indexer ladite table d'indexage (60) alors que les broches à ressort (47) sont dans la position rétractée, ce qui a pour effet que le gabarit de bobinage (43) en forme de segment peut être libéré de tout contact dans ladite découpe (55-1) dudit gabarit de bobinage (55) en forme de disque, de manière à permettre la rotation dudit plateau rotatif (3).

8. Machine comportant un appareil de bobinage de bobines d'induit en forme de disques selon l'une des revendications 1 à 7, en tant qu'unité (30) de bobinage de bobines, caractérisé par une unité de chauffage électrique (B) située dans une position distante de ladite unité (A) de bobinage des bobines, et ce d'un angle prédéterminé, de manière à envoyer un courant aux bobines (41-1) tout en appliquant une pression prédéterminée audit gabarit (8) de bobinage des bobines, et une unité d'éjection des bobines, située dans une position distante de ladite unité de chauffage électrique (B), et ce d'un angle prédéterminé, ledit fil magnétique (41) étant gainé au moyen d'un matériau de revêtement fixé par adhérence par fusion.

9. Appareil selon la revendication 8, caractérisé en ce que ladite unité de chauffage électrique (B) comporte un organe de serrage (64-3) ayant la forme d'un segment, dont les dimensions sont légèrement inférieures à ladite découpe (55-1) ménagée dans une partie dudit gabarit de bobinage (55) en forme de disque, ce qui a pour effet que ce gabarit (55) en forme de disque et ledit organe de serrage (64-3) sont pressés contre les bobines (41-1) à une pression prédéterminée lorsqu'un courant est envoyé aux bobines (41-1) en vue de chauffer ces dernières.

# FIG. 1

FIG. 2

0 072 538

FIG. 3

0 072 538

FIG. 4

4

FIG. 5

FIG. 6

115°43'

| 26 | 27 | 28 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |

FIG. 7

51°26'

47

41-1

52

51

47

FIG. 8

51°26'

115°43'

41-1

115°43'